# EUROPÄISCHE PATENTSCHRIFT

(11) **EP 1 871 627 B1**
(45) Veröffentlichungstag und Bekanntmachung des Hinweises auf die Patenterteilung: **02.03.2011**
(21) Anmeldenummer: 06725706.3
(22) Anmeldetag: 11.04.2006
(51) Int. Cl.: B60J 10/00

(54) **VERFAHREN UND VORRICHTUNG ZUM ANBRINGEN EINES DICHTUNGSPROFILS AN EINEM BAUTEIL, INSBESONDERE DER PERIPHERIE EINES ÖFFNUNGSABSCHLUSSES EINES KRAFTFAHRZEUGES**
METHOD AND DEVICE FOR APPLYING A SEALING PROFILED ELEMENT TO A COMPONENT, ESPECIALLY THE PERIPHERY OF AN OPENING EDGE OF A MOTOR VEHICLE
PROCEDE ET DISPOSITIF POUR MONTER UN PROFILE D'ETANCHEITE SUR UN ELEMENT, NOTAMMENT A LA PERIPHERIE D'UNE BORDURE DE FERMETURE D'AUTOMOBILE

(30) Priorität: 20.04.2005 DE 102005018404
(43) Veröffentlichungstag der Anmeldung: 02.01.2008
(73) Patentinhaber: ThyssenKrupp Drauz Nothelfer GmbH, 74076 Heilbronn (DE)
(72) Erfinder: HAUPENTHAL, Horst-Günter, 54411 Hermeskeil (DE); RAULAND, Theo, 54317 Osburg (DE)
(74) Vertreter: Cohausz & Florack
(86) Internationale Anmeldenummer: PCT/EP2006/061516
(87) Internationale Veröffentlichungsnummer: WO 2006/111489

(56) Entgegenhaltungen:
- EP-A- 0 778 172
- WO-A-03/091055
- WO-A-2005/072914
- US-A- 5 067 225

## Beschreibung

Die Erfindung betrifft ein Verfahren zum Anbringen eines Dichtungsprofils an einem Bauteil, insbesondere der Peripherie eines Öffnungsabschlusses eines Kraftfahrzeuges durch Anrollen, indem das insbesondere von einer Rolle abgezogene Dichtungsprofil an den längs der Peripherie wandernden Anbringungsort herangeführt und dort unter Verwendung eines Klebemittels angedrückt und befestigt wird.

Die Erfindung betrifft ferner eine Vorrichtung zum Anbringen eines Dichtungsprofils an einem Bauteil, insbesondere der Peripherie eines Öffnungsabschlusses eines Kraftfahrzeuges, mit einem Roboter, der eine entlang des Bauteils bewegbare Anrolleinheit für das Dichtungsprofil aufweist, die angetriebene Transportmittel und Führungsmittel für das Dichtungsprofil und eine angetriebene Andrückrolle aufweist.

Bei einem bekannten Verfahren und einer bekannten Vorrichtung der vorgenannten Art (DE 101 38 781 A1) können ein oder mehrere Führungsmittel für das Dichtungsprofil vorgesehen sein, die zwischen dem Punkt, an dem es von einer Vorratsrolle abgezogen wird, und dem Punkt, an dem es mit dem Anbringungsort am Bauteil in Kontakt gebracht wird, vorgesehen sind. Vorzugsweise sind die Führungsmittel als angetriebene Führungsrollen ausgebildet. Bei diesem Verfahren und dieser Vorrichtung kann sich deshalb das Dichtungsprofil zwischen den Führungsmitteln und der Andrückrolle, und damit auch dem Anbringungsort, mehr oder weiniger frei bewegen, jedenfalls zeigt die Erfahrung, dass auf diese Art und Weine eine exakte Positionierung des Dichtungsprofils am Anbringungsort nicht gewährleistet ist.

Bei einem anderen bekannten Verfahren und einer anderen bekannten Vorrichtung (WO 03/091055 A1) sind der Andrückrolle, am Anbringungsort ebenfalls Führungsmittel in Form von angetriebenen Rollen vorgeordnet. Zusätzlich ist die Andrückfläche der Andrückrolle profiliert, insbesondere genutet, um einen rückseitig am Dichtungsprofil angeordneten Steg aufzunehmen. Damit ist zwar eine zusätzliche Führung am Anbringungsort gegeben, doch ist der Einsatz einer solchen Vorrichtung auf Dichtungsprofile mit einer entsprechenden Profilgeometrie, insbesondere mit rückseitig angeordneten Stegen, beschränkt.

Der Erfindung liegt die Aufgabe zugrunde, ein Verfahren und eine Vorrichtung zum Anbringen von Dichtungsprofilen an Bauteilen zu entwickeln, mit dem unabhängig von der Profilgeometrie des Dichtungsprofils dieses lagegenau am Anbringungsort angebracht werden kann.

Verfahrensmäßig wird diese Aufgabe dadurch gelöst, dass das Andrücken des Dichtungsprofils am Anbringungsort unabhängig vom Führen des Dichtungsprofils am Anbringungsort erfolgt.

Vorrichtungsmäßig wird diese Aufgabe dadurch gelöst, dass die Führungsmittel am Ort der Andrückrolle angeordnet und als seitliche Borde ausgebildet sind, und dass die Andrückrolle relativ zu diesen Borden und dem Anbringungsort aus einer ersten inaktiven Position in eine zweite aktive Position in Richtung des Anbringungsortes und umgekehrt unabhängig verstellbar ist.

Beim Erfindungsgegenstand wird unabhängig von der Geometrie des Dichtungsprofils dieses optimal lagegenau dort geführt, wo es angebracht werden soll. Da das Führen und das Andrücken unabhängig voneinander sind, können die dafür erforderlichen Maßnahmen optimal gestaltet sein. Anders als im Stand der Technik braucht deshalb kein Kompromiss zwischen Führen und Andrücken eingegangen zu werden.

Um das Dichtungsprofil optimal am Anbringungsort zu führen, braucht nur eine Seitenführung vorgesehen zu sein. Rückseitig wird es dann nur von den Andrückmitteln beaufschlagt. Das dauerhafte Haften des Dichtungsprofils am Bauteil kann vorteilhaft dadurch beeinflusst werden, dass das Dichtungsprofil beim Andrücken in Längsrichtung gestaucht wird. Dadurch werden Zugspannungen im entspannten Dichtungsprofil vermieden.

Die für die Führung vorgesehenen seitlichen Borde können als frei laufende oder angetriebene Kreisscheiben ausgebildet sein. Im Falle frei laufender Kreisscheiben werden diese in der Regel durch das zugeführte Dichtungsprofil mitgeschleppt.

Die seitlichen Borde können nicht nur der Führung des Dichtungsprofils dienen, sondern können auch für die axial schwimmend gelagerte Andrückrolle als seitliche Anschläge dienen.

Nach einer Ausgestaltung der Erfindung ist vorgesehen, dass die Andrückrolle auf einer Stell- und Antriebseinheit abgestützt ist. Diese Ausgestaltung lässt sich vorzugsweise dadurch realisieren, dass die Stell- und Antriebseinheit eine Antriebsrolle, von der über einen Antriebsriemen die Andrückrolle angetrieben ist, und zwei Stütz- und Umlenkrollen aufweist, in deren Zwickel die Andrückrolle durch den Antriebsriemen gehalten ist. Diese Ausgestaltung ist konstruktiv besonders einfach. Die Andrückrolle selbst ist vorzugsweise als Ring ausgebildet. Im folgenden wird die Erfindung anhand einer ein Ausführungsbeispiel in schematisch stark vereinfachter Darstellung wiedergebenden Zeichnung näher erläutert. Im einzelnen zeigen:

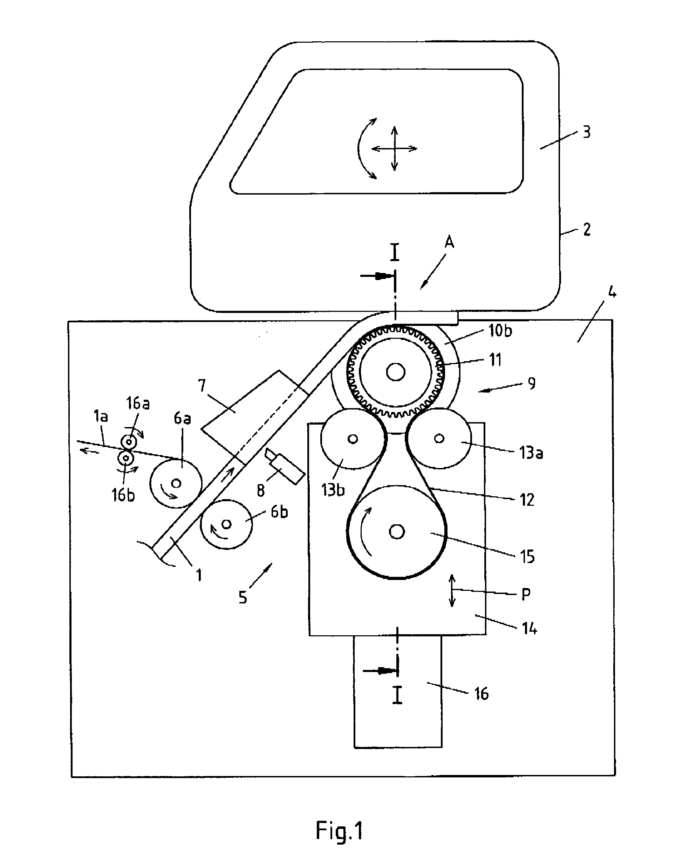

- Fig. 1: eine Vorrichtung zum Anbringen eines Dichtungsprofils an einem Bauteil, insbesondere der Peripherie einer Tür eines Kraftfahrzeuges beim Anbringen eines Dichtungsprofils, in der aktiven Position der Andrückrolle, in Seitenansicht,
- Fig. 2: die Vorrichtung nach Fig. 1 im Schnitt nach Linie I-I der Fig. 1 und
- Fig. 3: die Vorrichtung gemäß Fig. 1, allerdings in der inaktiven Position der Andrückrolle, im Schnitt nach Linie I-I der Fig. 1.

Die Vorrichtung zum Anbringen eines Dichtungsprofils 1 an einem Bauteil, hier an der Peripherie 2 einer Tür 3 eines Kraftfahrzeuges, weist einen Roboter auf, dessen Maschinengestell 4 nicht dargestellte Halte- und nur schematisch durch Pfeile dargestellte Stellmittel für die Tür 2 aufweist. Mit diesen Stellmitteln kann die Tür 3 in x- und y-Achsrichtung verstellt und um die z-Achse verdreht werden. Diese Bewegungen erfolgen dann relativ zu einer Anrolleinheit 5 für das Dichtungsprofil 1. Die Anrolleinheit 5 weist Transportrollen 6a, 6b auf, die von einer nicht dargestellten Vorratsrolle das endlose Dichtungsprofil 1 abziehen und es einer Führungseinheit 7 zuführen. An seiner anzuklebenden Seite ist das Dichtungsprofil 1 mit einem Kleber versehen, der von einem Liner 1a abgedeckt ist. Dieser Liner 1a wird von einem Abzugsrollenpaar 16a, 16b abgezogen. Zum Ablängen des Dichtungsprofils 1 dient eine der Führungseinheit 7 gegenüber angeordnete Schneideinheit 8. Die so weit beschriebenen Teile der Anrolleinheit 5 sind stationär auf dem Maschinengestell 4 angeordnet.

Ein Anrollkopf 9 der Anrolleinheit 5 weist zwei seitliche Bordscheiben 10a, 10b auf, die auf dem Maschinengestell 4 ortsfest, aber frei drehbar gelagert sind. Sie können allerdings auch angetrieben werden. Zwischen diesen als Kreisscheiben ausgebildeten Bordscheiben 10a, 10b ist eine als Ring ausgebildete, gezahnte Andrückrolle 11 angeordnet. Die Bordscheiben 10a, 10b begrenzen die seitliche Beweglichkeit der Andrückrolle 11. Um die Andrückrolle 11 ist ein endloser gezahnter Antriebsriemen 12 geschlungen. Dieser Antriebsriemen 12 läuft ferner über zwei Stütz- und Umlenkrollen 13a, 13b, die auf einem Träger 14 frei drehbar, aber ortsfest gelagert sind. Der Antriebsriemen 12 umschlingt weiter ein Antriebsrad 15, das ebenfalls auf dem Träger 14 ortsfest gelagert ist. Durch diese Art des Antriebes wird die Andrückrolle 11 nicht nur angetrieben, sondern auch auf den Stütz- und Umlenkrollen 13a, 13b gehalten. Der Träger 14 mit der Antriebsrolle 15, den Stütz- und Umlenkrollen 13a, 13b und der darauf mit dem Antriebsriemen 12 gehaltenen, sonst frei beweglichen Andrückrolle 11 ist mittels eines z.B. als Pneumatikzylinder ausgebildeten Stellmittels 17 in Richtung des Doppelpfeils P verstellbar. Das bedeutet, dass die Andrückrolle 11 sowohl relativ zu den Bordscheiben 10a, 10b als auch zu der Peripherie 1 der Fahrzeugtür 2 verstellbar ist.

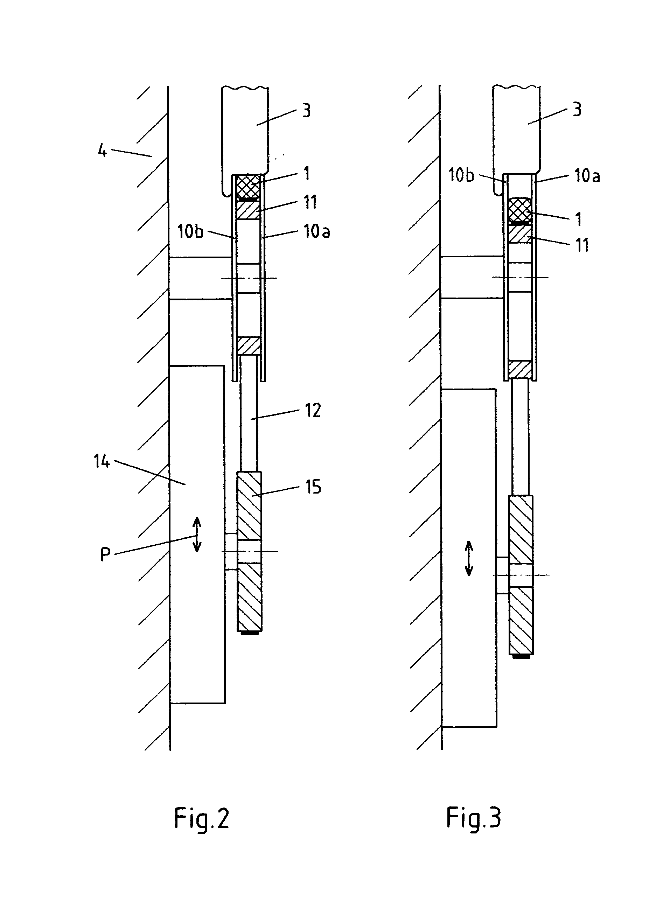

Um die Vorrichtung in Betrieb zu nehmen, ist der Anrollkopf 9 zunächst in seine inaktive Position verfahren, wie Fig. 3 zeigt. In dieser Position, in der die Andrückrolle 11 einen großen Abstand vom Anbringungsort A des Dichtungsprofils 1 an der Peripherie 2 der Fahrzeugtür 3 hat, lässt sich das Dichtungsprofil 1 problemlos einführen. Der Anfang wird bis zum Scheitelpunkt der Andrückrolle 11 eingeführt. Dann wird der Anrollkopf 9 hochgefahren, und die Andrückrolle 11 drückt das Dichtungsprofil 1 an die Peripherie 2 an. Dann kann die Fahrzeugtür 3 relativ zum Anrollkopf 9 bewegt werden. Dabei führen die seitlichen Borde 10a, 10b das Dichtungsprofil 1 im Extremfall bis an die Peripherie 2. Die Andrückrolle 11 ist so eingestellt, dass sie dabei optimalen Druck auf das Dichtungsprofil 1 ausübt. Für einen optimalen Anpressdruck kann es sinnvoll sein, den Antriebsriemen 12 an seiner Andrückfläche längs zu profilieren. Dadurch können lokal im Bereich der Stege höhere Anpressdrücke aufgebracht werden. Um das Dichtungsprofil beim Andrücken zu stauchen, werden die Transportrollen 6a, 6b mit höherer Umfangsgeschwindigkeit als die Andrückrolle 11 angetrieben.

Es versteht sich, dass das erfindungsgemäße Prinzip auch bei einem ortsfest gehaltenen Bauteil realisierbar ist. Dann wird die Anrolleinheit mit den Zuführmitteln für das Dichtungsprofil entlang des Bauteils bewegt.

## Patentansprüche

1. Verfahren zum Anbringen eines Dichtungsprofils an einem Bauteil (2), insbesondere der Peripherie eines Öffnungsabschlusses eines Kraftfahrzeuges durch Anrollen, indem das insbesondere von einer Rolle abgezogene Dichtungsprofil (5) an den längs der Peripherie wandernden Anbringungsort (A) herangeführt und dort unter Verwendung eines Klebemittels angedrückt und befestigt wird, **dadurch gekennzeichnet, dass** das Andrücken des Dichtungsprofils (5) am Anbringungsort (A) unabhängig vom Führen des Dichtungsprofils (5) am Anbringungsort (A) erfolgt.

2. Verfahren nach Anspruch 1, **dadurch gekennzeichnet, dass** das Dichtungsprofil (5) nur an seinen beiden Seiten geführt ist und rückseitig nur von einem Andrückmittel beaufschlagt ist.

3. Verfahren nach Anspruch 1 oder 2, **dadurch gekennzeichnet, dass** das Dichtungsprofil beim Andrückern in Längsrichtung gestaucht wird.

4. Vorrichtung zum Anbringen eines Dichtungsprofils (5) an einem Bauteil (2), insbesondere der Peripherie eines Öffnungsabsehlusses eines Kraftfahrzeuges, mit einem Roboter, der eine entlang des Bauteils (2) bewegbare Anrolleinheit (4) für das Dichtungsprofil (5) aufweist, die angetriebene Transportmittel (6a, 6b) und Führungsmittel (10a, 10b) für das Dichtungsprofil (5) und eine angetriebene Andrückrolle (11) aufweist, insbesondere zur Durchführung des Verfahrens nach Anspruch 1, **dadurch gekennzeichnet, dass** die Führungsmittel (10a, 10b) am Ort der Andrückrolle (11) angeordnet und als seitliche Borde ausgebildet sind, und dass die Andrückrolle (11) relativ zu diesen Borden (10a, 10b) und dem Anbringungsort (A) des Dichtungsprofils (1) aus einer ersten inaktiven Position in eine zweite aktive Position in Richtung des Anbringungsortes (A) und umgekohrt unabhängig verstellbar ist.

5. Vorrichtung nach Anspruch 4, **dadurch gekennzeichnet, dass** die seitlichen Borde (10a, 10b) freilaufende oder angetriebene Kreisscheiben sind.

6. Vorrichtung nach Anspruch 4 oder 5, **dadurch gekennzeichnet, dass** die seitlichen Borde (10a, 10b) für das Dichtungsprofil (5) auch der Andrückrolle (11) als seitliche Anschläge dienen.

7. Vorrichtung nach einem der Ansprüche 4 bis 6, **dadurch gekennzeichnet, dass** die Andrückrolle (11) auf einer Stell- und Antriebseinheit (13a, 13b, 14, 15) abgestützt ist.

8. Vorrichtung nach Anspruch 7 **dadurch gekennzeichnet, dass** die Stell- und Antriebseinheit (13a, 13b, 14, 15) eine Antriebsrolle (15), von der über einen Antriebsriemen (12) die Andrückrolle (11) angetrieben ist, und zwei Stütz- und Umlenkrollen (13a, 13b) aufweist, in deren Zwickel die Andrückrolle (11) durch den Antriebsriemen (12) gehalten ist.

9. Vorrichtung nach Anspruch 8, **dadurch gekennzeichnet, dass** die Andrückrolle (11) als Ring ausgebildet ist.

10. Vorrichtung nach einem der Ansprüche 4 bis 9, **dadurch gekennzeichnet, dass** die Umfangsgeschwindigkeit der Andrückrolle (11) kleiner als die Transportgeschwindigkeit der Transportmittel (6a, 6b) ist.

## Claims

1. A method for applying a sealing profile to a component (2), in particular to the periphery of a terminal portion of an opening of a motor vehicle by means of rolling, by guiding the sealing profile (5) which is in particular drawn from a roll to the mounting location (A) which is moving along the periphery, where it is pressed on and mounted using an adhesive, **characterized in that** the sealing profile (5) is pressed on at the mounting location (A) independently from guiding the sealing profile (5) at the mounting location (A).

2. The method according to claim 1, **characterized in that** the sealing profile (5) is guided only on its two sides and only one press-on means is applied on its backside.

3. The method according to claim 1 or 2, **characterized in that** the sealing profile is compressed in its longitudinal direction during pressing-on.

4. A device for applying a sealing profile (5) to a component (2), in particular the periphery of a terminal portion of an opening of a motor vehicle, comprising a robot comprising a rolling unit (4) for the sealing profile (5) which can be moved along the component (2), said unit comprising driven conveying means (6a, 6b) and guiding means (10a, 10b) for the sealing profile (5) as well as a driven press-on roller (11), in particular for performing the method according to claim 1, **characterized in that** the guiding means (10a, 10b) are arranged at the position of the press-on roller (11) in the form of lateral flanges, and **in that** the press-on roller (11) is independently adjustable relative to the said flanges (10a, 10b) as well as the mounting location (A) of the sealing profile (1) from a first, inactive position into a second, active position in the direction of the mounting location (A) and vice versa.

5. The device according to claim 4, **characterized in that** the lateral flanges (10a, 10b) are freewheeling or driven circular discs.

6. The device according to claim 4 or 5, **characterized in that** the lateral flanges (10a, 10b) for the sealing profile (5) also serve as lateral limit stops for the press-on roller (11).

7. The device according to one of claims 4 to 6, **characterized in that** the press-on roller (11) is supported on an adjustment and driving unit (13a, 13b, 14, 15).

8. The device according to claim 7, **characterized in that** the adjustment and driving unit (13a, 13b, 14, 15) comprises a driving roller (15) which drives the press-on roller (11) via a driving belt (12), as well as two backup and deflection rollers (13a, 13b), said press-on roller (11) being held through the driving belt (12) in the gap between them.

9. The device according to claim 8, **characterized in that** the press-on roller (11) is embodied as a ring.

10. The device according to one of claims 4 to 9, **characterized in that** the circumferential speed of the press-on roller (11) is smaller than the conveying speed of the conveying means (6a, 6b).

## Revendications

1. Procédé pour le montage par roulement d'un profilé d'étanchéité sur un élément (2), en particulier sur la périphérie d'une bordure d'ouverture d'un véhicule automobile, le profilé d'étanchéité (5), qui est en particulier extrait d'un rouleau, étant guidé à l'endroit de montage (A) en se déplaçant le long de la périphérie et y étant pressé et fixé au moyen d'un adhésif, **caractérisé en ce que** la compression du profilé d'étanchéité (5) à l'endroit de montage (A) est effectuée indépendamment du guidage du profilé d'étanchéité (5) à l'endroit de montage (A).

2. Procédé selon la revendication 1, **caractérisé en ce que** le profilé d'étanchéité (5) est guidé uniquement sur ses deux côtés et n'est sollicité sur sa face arrière que par un moyen de pression.

3. Procédé selon revendication 1 ou 2, **caractérisé en ce que** le profilé d'étanchéité est refoulé dans la direction longitudinale lors de la compression.

4. Dispositif pour le montage d'un profilé d'étanchéité (5) sur un élément (2), en particulier sur la périphérie d'une bordure d'ouverture d'un véhicule automobile au moyen d'un robot, qui est doté d'une unité de roulement (4) du profilé d'étanchéité (5), qui peut être déplacée le long de l'élément (2), et présente des moyens de transport (6a, 6b) menés et des moyens de guidage (10a, 10b) pour le profilé d'étanchéité (5) et un rouleau de pression (11) mené, dispositif destiné en particulier pour l'exécution du procédé selon la revendication 1, **caractérisé en ce que** les moyens de guidage (10a, 10b) sont disposés à la position du rouleau de pression (11) et sont réalisés en tant que bordures latérales et que le rouleau de pression (11) peut être indépendamment déplacé, par rapport à ces bordures (10a, 10b) et à l'endroit de montage (A) du profilé d'étanchéité (5), d'une première position inactive à une deuxième position active, en direction de l'emplacement de montage (A) et inversement.

5. Dispositif selon la revendication 4, **caractérisé en ce que** les bordures latérales (10a, 10b) sont des disques libres ou menés.

6. Dispositif selon revendication 4 ou 5, **caractérisé en ce que** les bords latéraux (10a, 10b) servent de butée latérale pour le profilé d'étanchéité (5) ainsi que pour le cylindre de pression (11).

7. Dispositif selon l'une des revendications 4 à 6, **caractérisé en ce que** le cylindre de pression (11) prend appui sur une unité de réglage et d'entraînement (13a, 13b, 14, 15).

8. Dispositif selon la revendication 7, **caractérisé en ce que** l'unité de réglage et de commande (13a, 13b, 14, 15) est une roue motrice (15) au moyen de laquelle le rouleau de pression (11) est entraîné par l'intermédiaire d'une courroie de transmission (12), et qui présente deux galets de support et de renvoi (13a, 13b), dans le pincement desquels le rouleau de pression (11) est retenu par la courroie de transmission (12) .

9. Dispositif selon la revendication 8, **caractérisé en ce que** le rouleau de pression (11) est réalisé sous forme d'anneau.

10. Dispositif selon l'une des revendications 4 à 9, **caractérisé en ce que** la vitesse périphérique du rouleau de pression (11) est inférieure à la vitesse de transport des moyens de transport (6a, 6b).
